# EUROPEAN PATENT APPLICATION

(11) **EP 4 782 966 A1**
(43) Date of publication of application: **29.07.2026**
(21) Application number: 23952648.6
(22) Date of filing: 21.09.2023
(51) Int. Cl.: G06F 3/01

(54) **KEY INFORMATION COLLECTION METHOD AND APPARATUS, AND INTELLIGENT DRIVING DEVICE**

(71) Applicant: Yinwang Intelligent Technologies Co., Ltd., Shenzhen, Guangdong 518110 (CN)
(72) Inventor: ZHANG, Jie, Shenzhen, Guangdong 518129 (CN); YE, Chuangguan, Shenzhen, Guangdong 518129 (CN); ZHANG, Ling, Shenzhen, Guangdong 518129 (CN)
(74) Representative: Maiwald GmbH
(86) International application number: PCT/CN2023/120406
(87) International publication number: WO 2025/059991

(57) **Abstract**

This application provides a key information collection method and apparatus, and an intelligent driving device. The method includes: obtaining biometric feature information of a user in the intelligent driving device, where the biometric feature information of the user includes one or more of the following: expression information of the user, action information of the user, speech information of the user, eyeball focus information of the user, or pupil change information of the user; obtaining traveling environment information of the intelligent driving device; and determining key information in the traveling environment information based on the biometric feature information of the user, where the key information is for assisting in intelligent driving. Embodiments of this application can improve effectiveness of the collected key information, reduce missed and false detections of obstacles, and further facilitate planning and implementation of an autonomous driving task.

## Description

### TECHNICAL FIELD

This application relates to intelligent driving technologies, is applied to the field of key information collection for intelligent driving, and in particular, relates to a key information collection method and apparatus, and an intelligent driving device.

### BACKGROUND

With development of society, intelligent vehicles are gradually entering people's daily life, and intelligent driving plays an increasingly important role. An intelligent driving system is a computer system that can identify and detect an object based on data collected by a perception system, generate a result through calculation and analysis, and directly control a terminal or assist a human driver (or another decision-making entity) in controlling the terminal. A perception subsystem of the intelligent driving system is usually implemented by using a neural network model. During training of the neural network model, traveling environment information needs to be collected in advance, and learning and training are performed based on the traveling environment information, so that the model can learn to identify and detect objects that may affect a driving decision in the traveling environment information.

The traveling environment information may include a plurality of types of information such as obstacles, traffic lights, lane lines, and traffic signs. For example, in obstacle identification, a larger quantity of types of input obstacles during training indicates higher obstacle identification accuracy of a trained model. On the contrary, if information about some obstacles is not used in the model training process, identification results of the model for these obstacles are inaccurate, and cases such as a missed detection of an obstacle (for example, an object fails to be identified as an obstacle) and a false detection of an obstacle (an obstacle is incorrectly identified as another obstacle) are likely to occur. When the missed detection or false detection occurs in an intelligent driving scenario, the intelligent driving terminal may fail to make a correct decision, seriously endangering driving safety. For example, if the intelligent driving terminal fails to perform an obstacle avoidance operation in a case of a missed detection of an obstacle, a collision may occur. For another example, the intelligent driving terminal performs an incorrect obstacle avoidance operation in a case of a false detection of an obstacle. Such operations affect comfort and safety of taking a vehicle. These rare obstacles or scenarios, referred to as corner cases (corner cases) or key information, are key issues that need to be resolved for large-scale application of intelligent driving.

### SUMMARY

This application discloses a key information collection method and apparatus, and an intelligent driving device, to determine key information in traveling environment information based on a biometric feature of a user, thereby improving effectiveness of the collected key information, reducing missed and false detections of obstacles, and further facilitating planning and implementation of an autonomous driving task.

According to a first aspect, this application provides a key information collection method, applied to an intelligent driving scenario. The method includes: obtaining biometric feature information of a user in the intelligent driving device; obtaining traveling environment information of the intelligent driving device; and determining key information in the traveling environment information based on the biometric feature information of the user, where the key information is for assisting in intelligent driving.

In the method, the user in the intelligent driving device may have corresponding reactions to a traveling environment, and these reactions may be reflected in the biometric feature information of the user. After the traveling environment information is obtained, the key information in the traveling environment information is determined based on the biometric feature information of the user, where the key information may be about a rare obstacle. In this way, the reactions of the user to the traveling environment can be used to select the key information in the traveling environment information, thereby obtaining the highly effective key information, and reducing missed detections of obstacles. For example, when the user reacts obviously to a traveling environment at a moment (for example, an eye fixation or a surprised expression), it indicates that a rare obstacle that affects driving, that is, key information, may exist in the traveling environment at the moment. In this case, traveling environment information at the current moment or in a time period corresponding to the current moment may be stored in time, to determine the key information.

In conclusion, in this solution, determining the key information in the traveling environment information based on a biometric feature of the user, to improve effectiveness of the collected key information, and obtain the key information in a more timely manner, thereby reducing the missed detections of obstacles, and facilitating planning and implementation of an autonomous driving task. Further, this solution can further improve a probability of obtaining a rare obstacle.

In a possible implementation, determining the key information in the traveling environment information based on the biometric feature information of the user includes: when the expression information of the user is preset expression information, determining the key information in the traveling environment information based on the expression information of the user; or when the action information of the user is preset action information, determining the key information in the traveling environment information based on the action information of the user; or when the speech information of the user is preset speech information, determining the key information in the traveling environment information based on the speech information of the user.

In the method, in this way, participation of the user in a key information collection process can be improved, and the user participates in key information collection more flexibly based on preset expressions, preset actions, and preset speeches.

In another possible implementation, after determining the key information in the traveling environment information based on the biometric feature information of the user, the method further includes: obtaining a description of the user for the key information; and storing a correspondence between the description and the key information, where the correspondence is for model training.

In the method, the description may be a label for the user to label the key information, thereby further facilitating training of a model and improving accuracy of the model.

In another possible implementation, obtaining the description of the user for the key information includes: outputting first prompt information, where the first prompt information is for requesting the description of the key information; and receiving response information of the first prompt information, and obtaining the description of the user for the key information based on the response information.

In another possible implementation, the method further includes: outputting a perception result of the intelligent driving device for a current traveling environment; and when the perception result is inconsistent with an actual observation result of the user, determining the key information in the traveling environment information based on the biometric feature information of the user.

In the method, in this way, participation of the user in the key information collection process is improved, but there is much interference with the user. In this case, comparison between the perception result and the actual observation result of the user improves the effectiveness of the collected key information, avoids missed and false detections of key information, and further improves the probability of obtaining a rare obstacle.

In another possible implementation, outputting the perception result of the intelligent driving device for the current traveling environment includes: projecting the perception result through an augmented reality-head up display AR-HUD; or displaying the perception result on a display; or broadcasting the perception result by voice.

In the method, in this way, the perception result is output in a flexible and diversified manner.

In another possible implementation, the method further includes: outputting second prompt information, where the second prompt information is for notifying the user that the intelligent driving device needs to obtain the biometric feature information of the user.

In the method, privacy of the user can be ensured by outputting the second prompt information to notify the user that the intelligent driving device needs to obtain the biometric feature information of the user.

According to a second aspect, this application provides an intelligent driving device. The intelligent driving device includes a computing platform, a first collection apparatus, and a second collection apparatus. The computing platform is configured to: obtain biometric feature information of a user in the intelligent driving device through the first collection apparatus, where the biometric feature information of the user includes one or more of the following: expression information of the user, action information of the user, speech information of the user, eyeball focus information of the user, or pupil change information of the user; obtain traveling environment information of the intelligent driving device through the second collection apparatus; and determine key information in the traveling environment information based on the biometric feature information of the user, where the key information is for assisting in intelligent driving.

In a possible implementation, when determining the key information in the traveling environment information based on the biometric feature information of the user, the computing platform is configured to: when the expression information of the user is preset expression information, determine the key information in the traveling environment information based on the expression information of the user; or when the action information of the user is preset action information, determine the key information in the traveling environment information based on the action information of the user; or when the speech information of the user is preset speech information, determine the key information in the traveling environment information based on the speech information of the user.

In another possible implementation, the computing platform is further configured to: obtain a description of the user for the key information; and store a correspondence between the description and the key information, where the correspondence is for model training.

In another possible implementation, when obtaining the description of the user for the key information, the computing platform is configured to: output first prompt information, where the first prompt information is for requesting the description of the key information; and receive response information of the first prompt information, and obtain the description of the user for the key information based on the response information.

In another possible implementation, the computing platform is further configured to: output a perception result of the intelligent driving device for a current traveling environment; and when the perception result is inconsistent with an actual observation result of the user, determine the key information in the traveling environment information based on the biometric feature information of the user.

In another possible implementation, when outputting the perception result of the intelligent driving device for the current traveling environment, the computing platform is configured to: project the perception result through an augmented reality-head up display AR-HUD; or display the perception result on a display; or broadcast the perception result by voice.

In another possible implementation, the computing platform is further configured to output second prompt information, where the second prompt information is for notifying the user that the intelligent driving device needs to obtain the biometric feature information of the user.

For technical effect brought by the second aspect or the possible implementations, refer to the descriptions of the technical effect of the first aspect or the corresponding implementations.

According to a third aspect, this application provides a key information collection apparatus. The key information collection apparatus is a vehicle-mounted computing platform or a chip system. The key information collection apparatus includes a processor and a memory. The memory and the processor are interconnected through a line, the processor is configured to obtain a computer program stored in the memory, and when the computer program is executed by the processor, the method in the first aspect and the possible implementations is implemented.

According to a fourth aspect, this application provides a computer-readable storage medium. The computer-readable storage medium stores computer instructions, and when the computer instructions are run on a processor, the method in the first aspect and the possible implementations is implemented.

According to a fifth aspect, this application provides a computer program product. The computer program product includes a computer program or instructions, and when the computer program or the instructions are run on a computer, the method in the first aspect and the possible implementations is implemented.

According to a sixth aspect, this application provides a chip. The chip includes a circuit, and the circuit is configured to implement the method in the first aspect and the possible implementations.

### BRIEF DESCRIPTION OF DRAWINGS

FIG. 1 is a diagram of a structure of an intelligent driving device according to an embodiment of this application;
FIG. 2 is a diagram of a structure of another intelligent driving device according to an embodiment of this application;
FIG. 3 is a diagram of a traveling control apparatus for an intelligent driving device according to an embodiment of this application;
FIG. 4 is a schematic flowchart of a key information collection method according to an embodiment of this application;
FIG. 5 is a diagram of a type of traveling environment information of an intelligent driving device according to an embodiment of this application;
FIG. 6 is a diagram of a type of biometric feature information of a user according to an embodiment of this application;
FIG. 7 is a diagram of outputting second prompt information according to an embodiment of this application;
FIG. 8 is a diagram of a type of key information according to an embodiment of this application;
FIG. 9 is a diagram of a type of first indication information and response information according to an embodiment of this application;
FIG. 10A and FIG. 10B are a diagram of another type of first indication information and response information according to an embodiment of this application;
FIG. 11 is a diagram of projecting a perception result through an AR-HUD according to an embodiment of this application;
FIG. 12 is a diagram of an actual observation result of a user according to an embodiment of this application;
FIG. 13 is a diagram of a structure of a key information collection apparatus according to an embodiment of this application;
FIG. 14 is a diagram of a structure of an intelligent driving device according to an embodiment of this application; and
FIG. 15 is a diagram of a structure of another key information collection apparatus according to an embodiment of this application.

### DESCRIPTION OF EMBODIMENTS

The following clearly and completely describes technical solutions in embodiments of this application with reference to the accompanying drawings in embodiments of this application. It is clear that the described embodiments are merely a part rather than all of embodiments of this application. All other embodiments obtained by a person skilled in the art based on embodiments of this application without creative efforts shall fall within the protection scope of this application.

Reference to "an embodiment", "some embodiments", or the like described in this application indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner. It is explicitly and implicitly understood by a person skilled in the art that embodiments described in the specification may be combined with another embodiment.

In descriptions of this application, unless otherwise specified, "/" means "or". For example, A/B may indicate A or B. In this specification, "and/or" describes only an association relationship between associated objects and indicates that there may be three relationships. For example, A and/or B may indicate the following three cases: Only A exists, both A and B exist, and only B exists. In addition, "at least one" means one or more, and "a plurality of" means two or more. "At least one of the following items (pieces)" or a similar expression thereof refers to any combination of these items, including any combination of singular items (pieces) or plural items (pieces). For example, at least one of a, b, or c may indicate a, b, c, a and b, a and c, b and c, or a, b, and c. a, b, and c each may be singular or plural.

In descriptions of this application, terms such as "example" or "for example" are used to give an example, an illustration, or a description. Any embodiment or design scheme described as an "example" or "for example" in this application should not be explained as being more preferred or having more advantages than another embodiment or design scheme. To be precise, use of the word such as "example" or "for example" is intended to present a relative concept in a specific manner.

In descriptions of this application, "first", "second", "third", and "fourth" are used to distinguish between different objects but do not indicate a particular order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

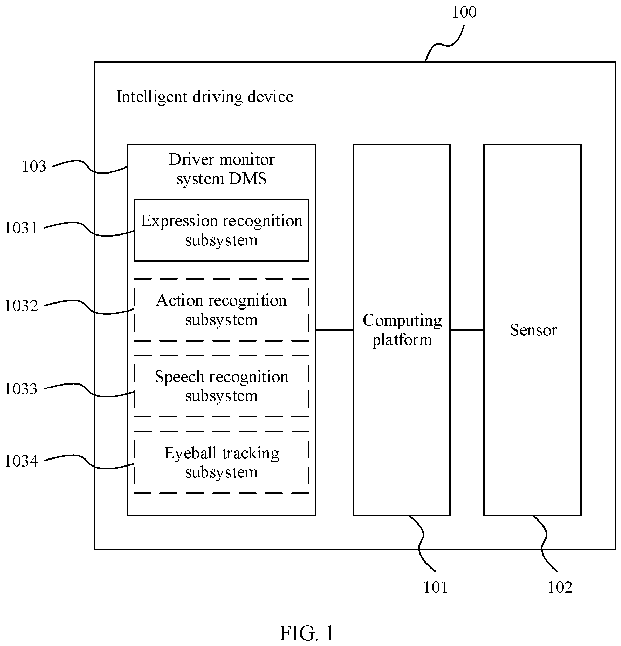

FIG. 1 is a diagram of a structure of an intelligent driving device 100 according to an embodiment of this application. The intelligent driving device 100 includes a computing platform 101, a first collection apparatus, and a second collection apparatus. The first collection apparatus may be a driver monitor system (driver monitor system, DMS) 103, and the second collection apparatus may be a sensor 102. The computing platform 101 may be understood as an apparatus having a computing capability. The computing platform 101 is configured to: obtain biometric feature information of a user in the intelligent driving device through the first collection apparatus/DMS 103, where the biometric feature information of the user includes one or more of the following: expression information of the user, action information of the user, speech information of the user, eyeball focus information of the user, or pupil change information of the user; and obtain traveling environment information of the intelligent driving device through the second collection apparatus/sensor 102. Optionally, the sensor 102 may be a camera, an infrared sensor, a millimeter-wave radar, an ultrasonic radar, a lidar, or a visual sensor. Optionally, there may be one or more sensors 102. When there are a plurality of sensors 102, types of the plurality of sensors may be different. For example, one sensor is a camera, and one sensor is a lidar. The computing platform 101 may be further configured to determine key information in the traveling environment information based on the biometric feature information of the user. Optionally, the DMS 103 may further include an expression recognition subsystem 1031. The expression recognition subsystem 1031 is configured to obtain the expression information of the user. Optionally, the DMS 103 may further include an action recognition subsystem 1032, a speech recognition subsystem 1033, and an eyeball tracking subsystem 1034. The action recognition subsystem 1032 is configured to obtain the action information of the user. The speech recognition subsystem 1033 is configured to obtain the speech information of the user. The eyeball tracking subsystem 1034 is configured to obtain the eyeball focus information of the user or the pupil change information of the user. Optionally, the action recognition subsystem 1032, the speech recognition subsystem 1033, and the eyeball tracking subsystem 1034 may not be included in the DMS 103, and may be specifically included in an intelligent cockpit (in this case, the first collection apparatus includes the DMS 103 and another subsystem that is in the intelligent cockpit and that is configured to obtain the biometric feature information of the user).

Optionally, when the DMS 103 includes the action recognition subsystem 1032, the speech recognition subsystem 1033, and the eyeball tracking subsystem 1034, that the computing platform 101 is configured to: obtain the biometric feature information of the user in the intelligent driving device may be understood as that the computing platform 101 is configured to obtain the expression information of the user through the expression recognition subsystem 1031 in the DMS 103, obtain the action information of the user through the action recognition subsystem 1032 in the DMS 103, obtain the speech information of the user through the speech recognition subsystem 1033 in the DMS 103, and obtain the eyeball focus information of the user or the pupil change information of the user through the eyeball tracking subsystem 1034 in the DMS 103.

Optionally, when the action recognition subsystem 1032, the speech recognition subsystem 1033, and the eyeball tracking subsystem 1034 are included in the intelligent cockpit, that the computing platform 101 is configured to obtain the biometric feature information of the user in the intelligent driving device may be understood as that the computing platform 101 is configured to: obtain the expression information of the user through the expression recognition subsystem 1031 in the DMS 103, obtain the action information of the user through the action recognition subsystem 1032 in the intelligent cockpit, obtain the speech information of the user through the speech recognition subsystem 1033 in the intelligent cockpit, and obtain the eyeball focus information of the user or the pupil change information of the user through the eyeball tracking subsystem 1034 in the intelligent cockpit. It should be noted that the intelligent driving device shown in FIG. 1 is applicable to a development, commissioning, or running scenario of an intelligent driving system.

It may be understood that the structure of the intelligent driving device in FIG. 1 is merely an example implementation in embodiments of this application. The intelligent driving device in embodiments of this application may further include more components as required.

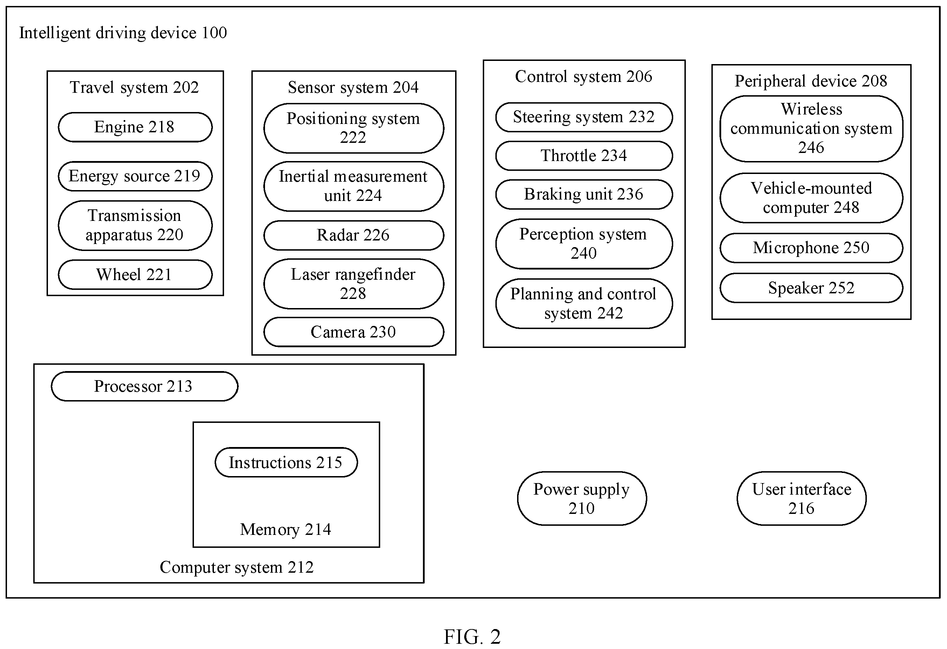

FIG. 2 further describes the structure of the intelligent driving device 100 based on FIG. 1. The intelligent driving device 100 may include various subsystems, for example, a travel system 202, a sensor system 204, a control system 206, one or more peripheral devices 208, a power supply 210, a computer system 212, and a user interface 216. Optionally, the intelligent driving device 100 may include more or fewer subsystems, and each subsystem may include a plurality of elements. In addition, all subsystems and elements of the intelligent driving device 100 may be interconnected in a wired or wireless manner.

The travel system 202 may include a component that provides power for the intelligent driving device 100 to move. In an embodiment, the travel system 202 may include an engine 218, an energy source 219, a transmission apparatus 220, and wheels/tires 221. The engine 218 may be an internal combustion engine, a motor, an air compression engine, or a combination of other types of engines, for example, a hybrid engine including a gasoline engine and a motor or a hybrid engine including an internal combustion engine and an air compression engine. The engine 218 converts the energy source 219 into mechanical energy.

Examples of the energy source 219 include gasoline, diesel, other petroleum-based fuels, propane, other compressed gas-based fuels, anhydrous alcohol, a photovoltaic module, a battery, and other power sources. The energy source 219 may also provide energy for another system of the intelligent driving device 100.

The transmission apparatus 220 may transmit mechanical power from the engine 218 to the wheels 221. The transmission apparatus 220 may include a gearbox, a differential, and a drive shaft. In an embodiment, the transmission apparatus 220 may further include another device, for example, a clutch. The drive shaft may include one or more shafts that may be coupled to one or more wheels 221.

The sensor system 204 may include several sensors that sense information about a surrounding environment of the intelligent driving device 100. For example, the sensor system 204 may include a positioning system 222 (the positioning system may be a GPS system, a BeiDou system, or another positioning system), an inertial measurement unit (inertial measurement unit, IMU) 224, a radar 226, a laser rangefinder 228, and a camera 230. The sensor system 204 may further include a sensor (for example, an in-vehicle air quality monitor, a fuel gauge, or an engine oil temperature gauge) of an internal system of the intelligent driving device 100. Sensor data from one or more of these sensors may be used to detect an object and corresponding features (a position, a shape, a direction, a speed, and the like) of the object. Such detection and recognition are key functions of a safe operation of the autonomous intelligent driving device 100.

The positioning system 222 may be configured to estimate a geographical location of the intelligent driving device 100. The IMU 224 is configured to sense a location and an orientation change of the intelligent driving device 100 based on an inertia acceleration. In an embodiment, the IMU 224 may be a combination of an accelerometer and a gyroscope.

The radar 226 may sense an object in a surrounding environment of the intelligent driving device 100 by using a radio signal. In some embodiments, the radar 226 may be further configured to sense a speed and/or a moving direction of an object, in addition to sensing the object. The radar 226 may be a lidar, a millimeter-wave radar, or an ultrasonic radar.

The laser rangefinder 228 may sense, by using a laser, an object in an environment in which the intelligent driving device 100 is located. In some embodiments, the laser rangefinder 228 may include one or more laser sources, a laser scanner, one or more detectors, and another system component.

The camera 230 may be configured to capture a plurality of images of a surrounding environment of the intelligent driving device 100. The camera 230 may be a static camera or a video camera. There may be one or more cameras 230.

The control system 206 controls operations of the intelligent driving device 100 and components of the intelligent driving device 100. The control system 206 may include various elements, including a steering system 232, a throttle 234, a braking unit 236, a perception system 240, and a planning and control system 242.

The steering system 232 may be operated to adjust a traveling direction of the intelligent driving device 100. For example, in an embodiment, the steering system 232 may be a steering wheel system.

The throttle 234 is configured to control an operation speed of the engine 218 and further control a speed of the intelligent driving device 100.

The braking unit 236 is configured to control the intelligent driving device 100 to decelerate. The braking unit 236 may slow down the wheel 221 through friction. In another embodiment, the braking unit 236 may convert kinetic energy of the wheel 221 into a current. The braking unit 236 may also slow down a rotational speed of the wheel 221 in another form, to control the speed of the intelligent driving device 100.

The perception system 240 may operate to process and analyze an image captured by the camera 230 and a reflected signal obtained by the radar 226, to identify an object and/or a feature in a surrounding environment of the intelligent driving device 100. The object and/or feature may include an obstacle, a traffic signal, a road boundary, and an obstacle. The perception system 240 may use object recognition, tracking algorithms, multi-modal fusion algorithms, and other computer vision technologies. In some embodiments, the perception system 240 may be configured to track an object, estimate a speed of the object, and the like. Optionally, the perception system 240 may be the computing platform 101 in FIG. 1.

The planning and control system 242 may be configured to navigate for the intelligent driving device 100, for example, to determine a traveling route of the intelligent driving device 100, and may further be configured to perform positioning, mapping, planning, wire control, and the like. In some embodiments, the planning and control system 242 may determine the traveling route for the intelligent driving device 100 based on data from the positioning system 222 and one or more predetermined maps. In some embodiments, when drawing a map for the environment, the planning and control system 242 may use a simultaneous localization and mapping (simultaneous localization and mapping, SLAM) algorithm.

Certainly, in an example, the control system 206 may additionally or alternatively include components other than those shown and described. Alternatively, some of the foregoing components may be removed.

The intelligent driving device 100 interacts with an external sensor, another vehicle, another computer system, or a user through the peripheral device 208. The peripheral device 208 may include a wireless communication system 246, a vehicle-mounted computer 248, a microphone 250, and/or a speaker 252.

In some embodiments, the peripheral device 208 provides a means for the user of the intelligent driving device 100 to interact with the user interface 216. For example, the vehicle-mounted computer 248 may provide information for the user of the intelligent driving device 100. The user interface 216 may further operate the vehicle-mounted computer 248 to receive an input of the user. The vehicle-mounted computer 248 may be operated by using a touchscreen. In another case, the peripheral device 208 may provide a means for the intelligent driving device 100 to communicate with another device located in a vehicle. For example, the microphone 250 may receive audio (for example, a voice command or another audio input) from the user of the intelligent driving device 100. Similarly, the speaker 252 may output an audio to the user of the intelligent driving device 100.

The wireless communication system 246 may communicate, in a wireless manner, with one or more devices directly or through a communication network. For example, the wireless communication system 246 may use 3G cellular communication such as CDMA, EVDO, or GSM/GPRS, 4G cellular communication such as LTE, or 5G cellular communication. The wireless communication system 246 may communicate with a wireless local area network (wireless local area network, WLAN) through Wi-Fi. In some embodiments, the wireless communication system 246 may directly communicate with a device through an infrared link, Bluetooth, or ZigBee. The wireless communication system 246 may include one or more dedicated short range communication (dedicated short range communications, DSRC) devices, and these devices may include public and/or private data communication between vehicles and/or roadside stations.

The power supply 210 may supply power to various components of the intelligent driving device 100. In an embodiment, the power supply 210 may be a rechargeable lithium-ion or lead-acid battery. One or more battery packs of such a battery may be configured as a power supply to supply power to components of the intelligent driving device 100. In some embodiments, the power supply 210 and the energy source 219 may be implemented together.

A part or all of functions of the intelligent driving device 100 are controlled by the computer system 212. The computer system 212 may include at least one processor 213. The processor 213 executes instructions 215 stored in a non-transient computer-readable medium like a memory 214. The computer system 212 may alternatively be a plurality of computing devices that control an individual component or a subsystem of the intelligent driving device 100 in a distributed manner.

The processor 213 may be any conventional processor like a commercially available CPU. Optionally, the processor may be, for example, an application-specific integrated circuit (application-specific integrated circuit, ASIC) or another hardware-based processor.

In various aspects described herein, the processor may be remote from the vehicle and communicate with the vehicle in a wireless manner. In other aspects, some of the processes described herein are performed by a processor disposed in the vehicle, and others are performed by a remote processor.

In some embodiments, the memory 214 may include the instructions 215 (for example, program logic), and the instructions 215 may be executed by the processor 213, to perform various functions of the intelligent driving device 100, including the functions described above. The memory 214 may also include additional instructions, including instructions for sending data to, receiving data from, interacting with, and/or controlling one or more of the travel system 202, the sensor system 204, the control system 206, and the peripheral device 208.

In addition to the instructions 215, the memory 214 may further store data and other information. This information may be used by the intelligent driving device 100 and the computer system 212 when the intelligent driving device 100 operates in an autonomous mode, a semi-autonomous mode, and/or a manual mode.

The user interface 216 is configured to provide information for the user of the intelligent driving device 100 or receive information from the user. Optionally, the user interface 216 may include one or more input/output devices within a set of peripheral devices 208, such as the wireless communication system 246, the vehicle-mounted computer 248, the microphone 250, and the speaker 252.

The computer system 212 may control functions of the intelligent driving device 100 based on inputs received from various subsystems (for example, the travel system 202, the sensor system 204, and the control system 206) and the user interface 216. For example, the computer system 212 may use input from the control system 206 to control the steering system 232 to avoid an obstacle detected by the sensor system 204. In some embodiments, the computer system 212 may operate to provide control on the intelligent driving device 100 and the subsystems of the intelligent driving device 100 in many aspects.

Optionally, one or more of the foregoing components may be installed separately from or associated with the intelligent driving device 100. For example, the memory 214 may be partially or fully separated from the intelligent driving device 100. The foregoing components may be communicatively coupled in a wired and/or wireless manner.

Optionally, the foregoing components are merely examples. In actual application, components in the foregoing modules may be added or removed according to an actual requirement. FIG. 2 should not be construed as a limitation on embodiments of this application.

The intelligent driving device 100 may be a car, a truck, a motorcycle, a bus, a ship, an airplane, a helicopter, a lawn mower, a recreational vehicle, a playground vehicle, a construction device, a tram, a golf cart, a train, a trolley, a smart home device, or the like. This is not particularly limited in embodiments of this application.

It may be understood that the structure of the intelligent driving device in FIG. 2 is merely an example implementation in embodiments of this application. The intelligent driving device in embodiments of this application includes but is not limited to the foregoing structure.

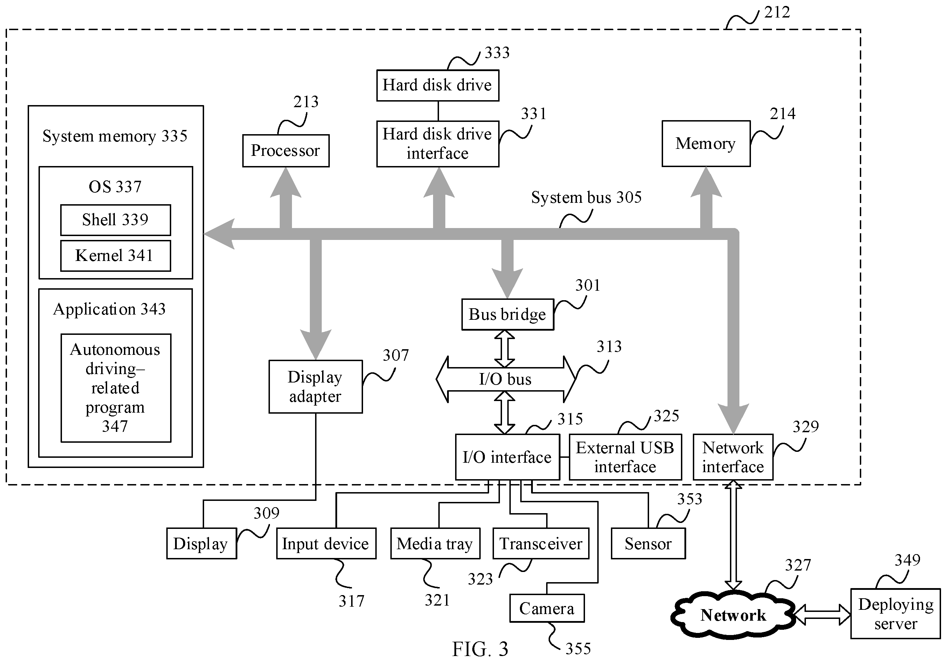

FIG. 3 is a diagram of a traveling control apparatus for an intelligent driving device according to an embodiment of this application. The apparatus is applied to FIG. 2, is equivalent to the computer system 212 shown in FIG. 2, and may include the processor 213. The processor 213 is coupled to a system bus 305. There may be one or more processors 213, and each processor may include one or more processor cores. The memory 214 may store related data information, and the memory 214 is coupled to the system bus 305. The computer system 212 further includes a display adapter (display adapter) 307. The display adapter 307 may drive a display 309. The display 309 is coupled to the system bus 305. The system bus 305 is coupled to an input/output (I/O) bus 313 via a bus bridge 301. An I/O interface 315 is coupled to the I/O bus 313. The I/O interface 315 communicates with a plurality of I/O devices, for example, an input device 317 (for example, a keyboard, a mouse, or a touchscreen) and a media tray (media tray) 321 (for example, a CD-ROM or a multimedia interface). A transceiver 323 (which may send and/or receive a radio communication signal) and a camera 355 (which may capture static and dynamic digital video images) are coupled to an external USB interface 325. Optionally, an interface connected to the I/O interface 315 may be a USB interface.

The processor 213 may be any conventional processor, including a reduced instruction set computer (reduced instruction set computer, RISC), a complex instruction set computer (complex instruction set computer, CISC), or a combination thereof. Optionally, the processor may be an ASIC. Optionally, the processor 213 may be a neural network processor or a combination of a neural network processor and the foregoing conventional processor.

Optionally, in various embodiments described in this specification, the computer system 212 may be located far away from the intelligent driving device, and may perform wireless communication with the intelligent driving device. In other aspects, some processes described in this specification are performed by a processor disposed in the intelligent driving device, and others are performed by a remote processor.

The computer system 212 may communicate with a software deploying server 349 via a network interface 329. The network interface 329 is a hardware network interface, for example, a network interface card. A network 327 may be an external network, for example, the internet, or an internal network, for example, the Ethernet or a virtual private network (virtual private network, VPN). Optionally, the network 327 may alternatively be a wireless network, for example, a Wi-Fi network or a cellular network.

The transceiver 323 (which may send and/or receive a radio communication signal) may use various wireless communication manners, including but not limited to 2nd generation mobile communication networks (2nd generation mobile networks, 2G), 3G, 4G, and 5G, or may use a DSRC technology, a long-term evolution vehicle-to-everything (long-term evolution vehicle-to-everything, LTE-V2X) technology, or the like. A main function of the transceiver 323 is to receive information data sent by an external device, and send, back to the external device for storage and analysis, information data generated when the intelligent driving device travels on a target road section.

A hard disk drive interface 331 is coupled to the system bus 305. The hard disk drive interface 331 is connected to a hard disk drive 333. A system memory 335 is coupled to the system bus 305. Data running in the system memory 335 may include an operating system 337 and an application 343 of the computer system 212.

A system memory 335 is coupled to the system bus 305. For example, in this application, the system memory 335 may be configured to store, in the memory in a specific format, traveling information of the vehicle traveling on the target road section.

The operating system (operating system, OS) 337 includes a shell (shell) 339 and a kernel (kernel) 341. The shell 339 is an interface between a user and the kernel of the operating system. The shell 339 is at an outermost layer of the operating system. The shell 339 manages interaction between the user and the operating system: waiting for a user input, interpreting the user input to the operating system, and processing various output results of the operating system.

The kernel 341 includes parts of the operating system that are used to manage a memory, a file, a peripheral, and a system resource. When directly interacting with hardware, the kernel of the operating system usually runs a process, provides inter-process communication, and provides CPU time slice management, interruption, memory management, I/O management, and the like.

The application 343 includes an autonomous driving-related program 347, for example, a program for managing interaction between an autonomous vehicle and an obstacle on a road, a program for controlling a route or a speed of the autonomous vehicle, and a program for controlling interaction between the autonomous vehicle and another autonomous vehicle on the road. The application 343 also exists in a system of the deploying server (deploying server) 349. In an embodiment, when the autonomous driving-related program 347 needs to be executed, the computer system 212 may download the autonomous driving-related program 347 from the deploying server 349.

A sensor 353 is associated with the computer system 212. The sensor 353 is configured to detect a surrounding environment of the computer system 212. For example, the sensor 353 can detect animals, vehicles, obstacles, pedestrian crosswalks, and the like. Further, the sensor can detect surrounding environments of the animals, the vehicles, the obstacles, or the pedestrian crosswalks. For example, the sensor can detect a surrounding environment of an animal like another animal in the surrounding environment, a weather condition, and brightness of the surrounding environment. Optionally, if the computer system 212 is located in an autonomous vehicle, the sensor may be a camera, an infrared sensor, a lidar, a visual sensor, a chemical detector, a microphone, or the like. Optionally, the sensor 353 may be the sensor 102 in FIG. 1.

It may be understood that the traveling control apparatus for the intelligent driving device in FIG. 3 is merely an example implementation in embodiments of this application. The traveling control apparatus used in the intelligent driving device in embodiments of this application includes but is not limited to the foregoing structure.

Currently, an obstacle information collection method is also referred to as a shadow mode collection method, that is, many scenarios are deployed on the intelligent driving device to trigger obstacle information collection. For example, obstacle information collection is triggered when a decision of an autonomous driving algorithm is inconsistent with a decision of manual driving; obstacle information collection is triggered when perception results of sensors are inconsistent with each other; and obstacle information collection is triggered when a vehicle brakes or turns sharply. However, these passive obstacle information collection manners may result in missed and false detections. To resolve the problems, the following solutions are provided in embodiments of this application.

It should be understood that intelligent driving mentioned below may include intelligent assisted driving, autonomous driving, and self-driving.

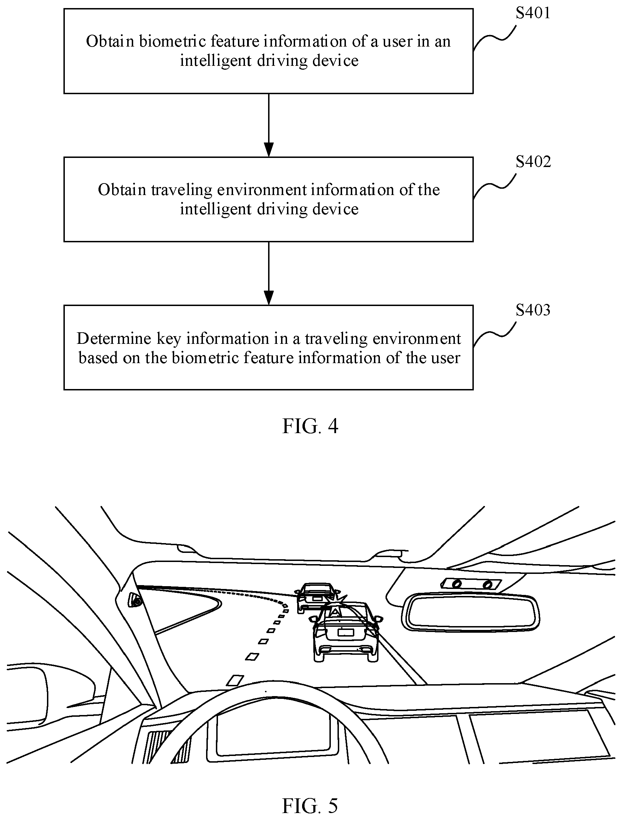

FIG. 4 is a schematic flowchart of a key information collection method according to an embodiment of this application. Optionally, the method is applied to the apparatus in FIG. 1, FIG. 2, or FIG. 3, for example, applied to the intelligent driving device shown in FIG. 1. A computing platform may be configured to support and perform steps S401 and S403 in the method procedure shown in FIG. 4, and a sensor is configured to support and perform step S402 in the method procedure shown in FIG. 4. The method may include the following steps S401 to S403. Details are as follows:
Step S401: Obtain biometric feature information of a user in an intelligent driving device.

Optionally, the user in the intelligent driving device may include a driver, and the user in the intelligent driving device may further include a front passenger.

Specifically, the biometric feature information includes one or more of the following: expression information of the user, action information of the user, speech information of the user, eyeball focus information of the user, or pupil change information of the user. Optionally, the eyeball focus information of the user may also be referred to as eye fixation point information of the user. The expression information of the user may include one or more of the following: excitement, like, surprise, pain, fear, humiliation, disgust, or anger. The action information of the user may include one or more of the following: blinking twice consecutively, opening a mouth wide, touching a nose with a hand, touching an ear with a hand, or touching a mouth with a hand. The speech information of the user is information for describing a current traveling environment, for example, may include one or more of the following: The user says "There was a traffic accident", "There was a landslide", "Construction ahead", or "Road work ahead" by voice. The pupil change information of the user may include pupil shrinkage or pupil expansion.

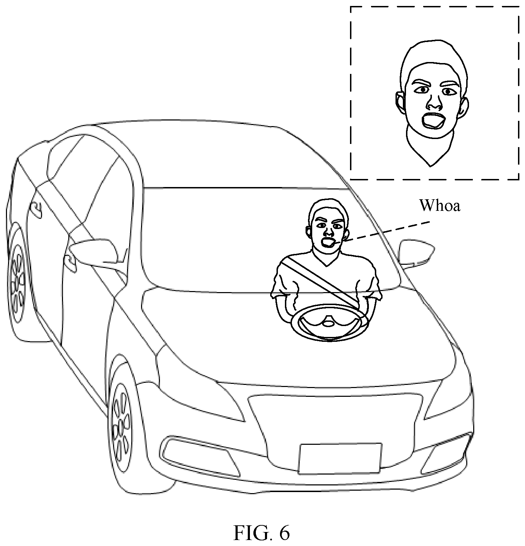

The biometric feature information reflects a reaction of the user to traveling environment information of the intelligent driving device. In other words, the reaction may be an expression, an action, a speech, an eyeball focus, a pupil change, or the like of the user. In an example, FIG. 5 is a diagram of a type of traveling environment information of an intelligent driving device according to this embodiment of this application, and FIG. 6 is a diagram of a type of biometric feature information of a user according to this embodiment of this application. In the traveling environment information in FIG. 5, the user says "Whoa" by voice, and the user shows a surprised expression (for example, the user opens eyes wide and opens a mouth wide). The biometric feature information of the user includes speech information of the user and expression information of the user. The speech information of the user is "Whoa", and the expression information of the user is surprised.

Optionally, that the computing platform is configured to obtain the biometric feature information of the user in the intelligent driving device may be understood as that the computing platform obtains the expression information of the user through an expression recognition subsystem in a DMS, obtains action information of the user through an action recognition subsystem in the DMS, obtains the speech information of the user through a speech recognition subsystem in the DMS, and obtains eyeball focus information of the user or pupil change information of the user through an eyeball tracking subsystem in the DMS.

Optionally, when the expression recognition subsystem, the action recognition subsystem, the speech recognition subsystem, and the eyeball tracking subsystem included in the DMS are included in an intelligent cockpit, that the computing platform is configured to obtain the biometric feature information of the user in the intelligent driving device may be understood as that the computing platform obtains the expression information of the user through the expression recognition subsystem in the DMS, obtains action information of the user through the action recognition subsystem in the intelligent cockpit, obtains the speech information of the user through the speech recognition subsystem in the intelligent cockpit, and obtains eyeball focus information of the user or pupil change information of the user through the eyeball tracking subsystem in the intelligent cockpit.

In a possible implementation, before obtaining the biometric feature information of the user in the intelligent driving device, the method further includes: outputting second prompt information, where the second prompt information is for notifying the user that the intelligent driving device needs to obtain the biometric feature information of the user.

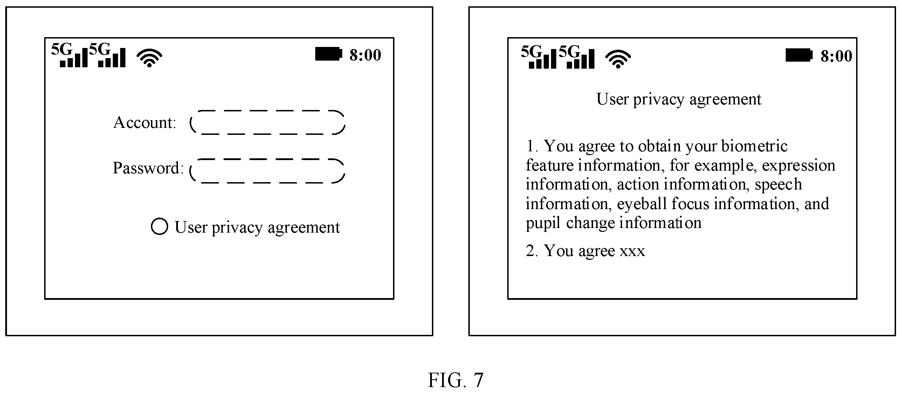

Optionally, the second prompt information may be a speech, text, or identifier. In an example, a system broadcasts "Your biometric feature information needs to be obtained. Do you agree?" by voice. Content broadcast by the system is second indication information. In another example, FIG. 7 is a diagram of outputting second prompt information according to an embodiment of this application. A "user privacy agreement" is displayed on a display, the user privacy agreement includes an agreement on obtaining biometric feature information of a user, and the user agreement is second indication information.

In the method, privacy of the user can be ensured by outputting the second prompt information to notify the user that the intelligent driving device needs to obtain the biometric feature information of the user.

Step S402: Obtain the traveling environment information of the intelligent driving device.

The computing platform obtains the traveling environment information of the intelligent driving device through a sensor. Optionally, the sensor may be a camera, an infrared sensor, a millimeter-wave radar, an ultrasonic radar, a lidar, or a visual sensor. There may be one or more sensors. Optionally, when there are a plurality of sensors, types of the plurality of sensors may be different. For example, one sensor is a camera, and one sensor is a lidar. The traveling environment information may include traffic lights, lane lines, traffic signs, animals, plants, vehicles, crosswalks, or pedestrians.

Optionally, in a traveling process of the intelligent driving device, the sensors keep obtaining the traveling environment information of the intelligent driving device. Optionally, the intelligent driving device may include a storage system. The storage system is configured to store the traveling environment information of the intelligent driving device in a period of time. The period of time may be set by a user or specified in a protocol. In an example, the storage system is configured to store the traveling environment information of the intelligent driving device in three hours.

Step S403: Determine key information in a traveling environment based on the biometric feature information of the user.

The key information is for assisting in driving. The key information may be information that affects a driving decision. Optionally, the key information may include but is not limited to a rare obstacle. For example, the rare obstacle may be a tree that is blown down by a typhoon and that lies across a road, a truck that overturns, or two vehicles in a traffic accident. Optionally, this manner of determining the key information in the traveling environment based on the biometric feature information of the user may be classified as a level 1.

It may be understood that determining the key information in the traveling environment based on the biometric feature information of the user may be understood as determining, based on the biometric feature information of the user, to store traveling environment information at a current moment or in a time period corresponding to the current moment, where the traveling environment information includes the key information. For example, when the user reacts obviously to a traveling environment at a moment (for example, an eye fixation or a surprised expression), it indicates that a rare obstacle that affects driving, that is, key information, may exist in the traveling environment at the moment. In this case, traveling environment information at the current moment or in a time period corresponding to the current moment may be stored in time, and the traveling environment includes the key information. In an example, at a moment T1, the user fixes eyes on a tree that is blown down by a typhoon and that lies across a road. In this example, the biometric feature information of the user is the eyeball focus information of the user. The key information in the traveling environment is determined based on the eyeball focus information of the user. In other words, it is determined based on the eyeball focus information of the user that traveling environment information at the moment T1 or in a time period corresponding to the moment T1 is stored, the traveling environment information includes the key information, and the key information is the tree across the road.

Optionally, after the key information in the traveling environment is determined based on the biometric feature information of the user, the key information may be stored. The key information may be for model training. Optionally, a trained model may be deployed on the intelligent driving device. Optionally, the model may be a three-dimensional target detection model. The three-dimensional target detection model may be implemented by using a neural network model. An input of the neural network model may be the traveling environment information of the intelligent driving device. For example, the traveling environment information may be a point cloud, an image, or ranging information. An output of the neural network may be three-dimensional information of an obstacle, for example, a location (x, y, z), an orientation angle, or a length, a width, and a height. In an example, the key information is a tree across a road. The key information is used for model training, and then the trained model may be deployed on the intelligent driving device. In this way, the model is iteratively trained and deployed, and this is repeated. When the intelligent driving device encounters a "tree across a road" situation, the trained model may identify this case.

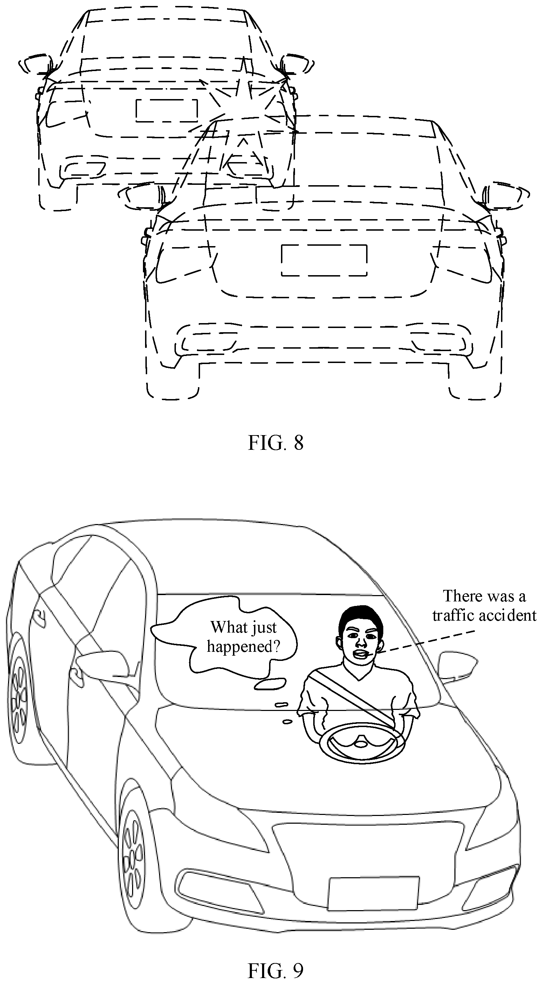

In an example, FIG. 5 is a diagram of a type of traveling environment information of the intelligent driving device according to this embodiment of this application, and FIG. 6 is a diagram of a type of biometric feature information of the user according to this embodiment of this application. In the traveling environment information in FIG. 5, the user says "Whoa" by voice, and the user shows the surprised expression (for example, the user opens the eyes wide and opens the mouth wide). The biometric feature information of the user includes the speech information of the user and the expression information of the user. The speech information of the user is "Whoa", and the expression information of the user is surprise. In this case, in the traveling environment information in FIG. 5 and the biometric feature information of the user in FIG. 6, the key information in the traveling environment may be determined based on the biometric feature information of the user. For details, refer to FIG. 8. FIG. 8 is a diagram of a type of key information according to an embodiment of this application.

In the method, the key information in the traveling environment information is determined based on the biometric feature information of the user. In this way, the reactions of the user to the traveling environment can be used to select the key information in the traveling environment information, thereby obtaining the highly effective key information, and reducing missed and false detections of obstacles, without interference with the driver.

Further, after the trained model is deployed on the intelligent driving device, rare obstacles that cannot be processed by a previous model are resolved, but new rare obstacles may be encountered. Therefore, key information may be obtained in the manner in this application, the model is iteratively trained and deployed, and this is repeated. In this way, the model can process an increasing number of rare obstacles, and a processing capability of the model is increasingly strong.

In another possible implementation, when the expression information of the user is preset expression information, the key information in the traveling environment information is determined based on the expression information of the user; or when the action information of the user is preset action information, the key information in the traveling environment information is determined based on the action information of the user; or when the speech information of the user is preset speech information, the key information in the traveling environment information is determined based on the speech information of the user.

Optionally, the preset expression information, the preset action information, and the preset speech information may be set by the user, or may be specified by a system or a protocol.

In an example, the preset action information is blinking twice consecutively, the action information of the user is that the driver blinks twice consecutively, and it is determined, based on the action information of the user, that current traveling environment information includes key information. Optionally, after the key information is determined, the current traveling environment information, information collected by a sensor in the intelligent driving device, current status information of the intelligent driving device, or algorithm operation information in the intelligent driving device may be stored.

In the method, in this way, participation of the user in a key information collection process can be improved, and the user participates in key information collection more flexibly based on preset expressions, preset actions, and preset speeches.

In another possible implementation, after determining the key information in the traveling environment based on the biometric feature information of the user, the method further includes: storing a description of the user for the key information; and storing a correspondence between the description and the key information, where the correspondence is for model training.

The description may be a speech, text, or identifier, and the description includes scenario information. For example, the description may be a label of the key information, and the label is labeled by the user. The correspondence between the description and the key information may be training data for the model. Optionally, the model may be a three-dimensional target detection model. In an example, the description of the user for the key information may be "There is a dog crossing the road". In another example, the description of the user for the key information is "There was a traffic accident ahead".

Optionally, obtaining the description of the user for the key information includes: outputting first prompt information, where the first prompt information is for requesting the description of the key information; and receiving response information of the first prompt information, and obtaining the description of the user for the key information based on the response information.

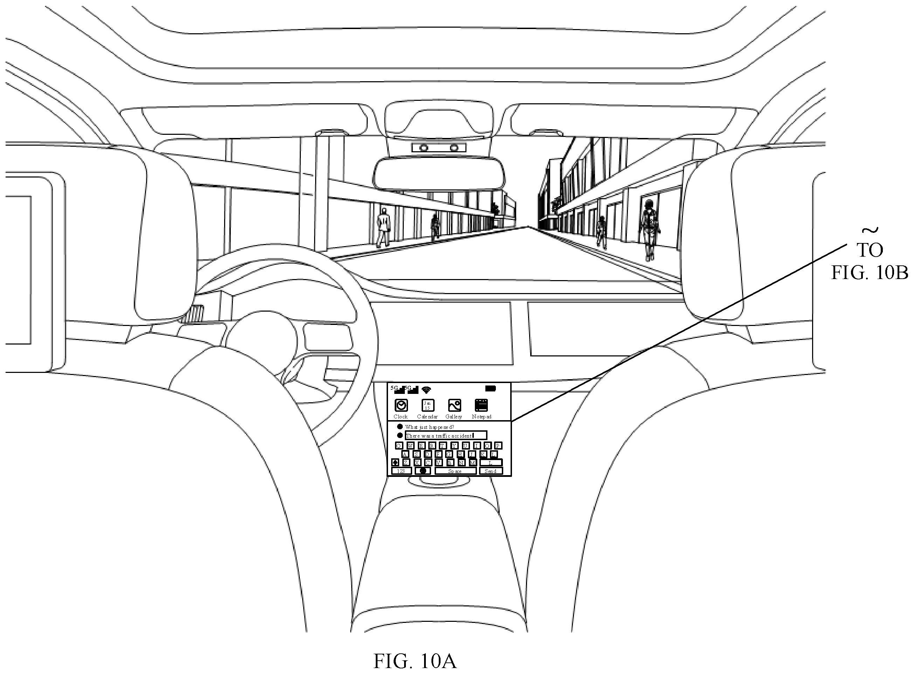

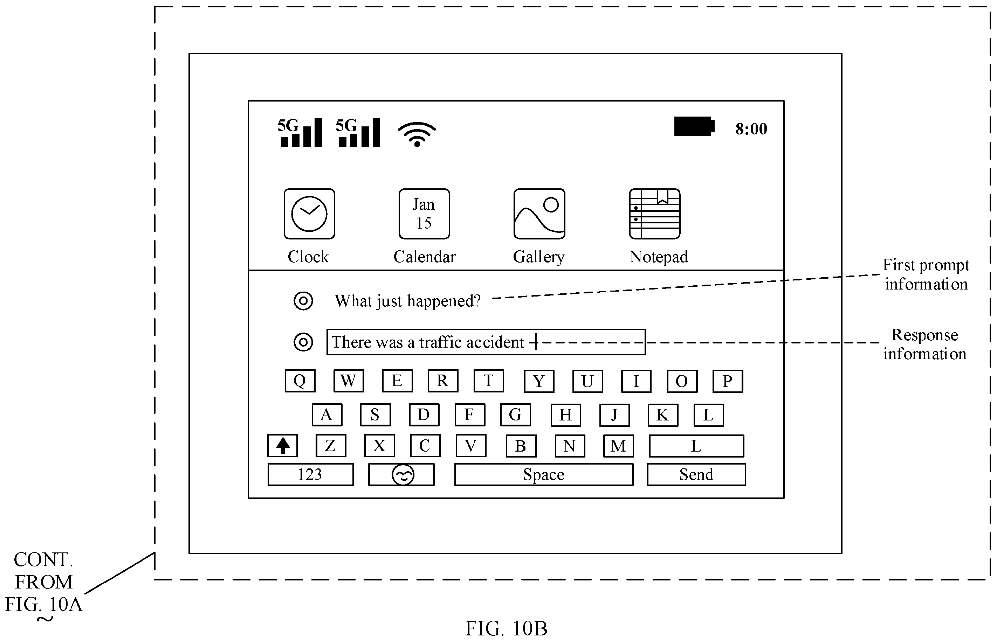

Optionally, the first prompt information may be a speech or text, and the response information may be a speech or text. In an example, FIG. 9 is a diagram of a type of first indication information and response information according to an embodiment of this application. The system broadcasts "What just happened" by voice. The speech "What just happened" is the first prompt information. The user says "There was a traffic accident" by voice. The speech "There was a traffic accident" is the response information. In another example, FIG. 10A and FIG. 10B are a diagram of another type of first indication information and response information according to an embodiment of this application. The display of the intelligent driving device displays "What just happened". The text "What just happened" is the first prompt information. The user enters "There was a traffic accident" on the display. The text "There was a traffic accident" is the response information.

In another possible implementation, the method further includes: outputting a perception result of the intelligent driving device for a current traveling environment; and when the perception result is inconsistent with an actual observation result of the user, determining the key information in the traveling environment information based on the biometric feature information of the user.

The perception result of the intelligent driving device for the current traveling environment may be determined by the intelligent driving device according to a perception algorithm.

Outputting the perception result of the intelligent driving device for the current traveling environment includes: projecting the perception result through an augmented reality-head up display (augmented reality-head up display, AR-HUD); or displaying the perception result on the display; or broadcasting the perception result by voice. Optionally, when the perception result is projected through the AR-HUD, the AR-HUD may be enabled by the user. Optionally, when the perception result is projected through the AR-HUD, the perception result may be projected onto a front windshield of the intelligent driving device.

When the perception result is inconsistent with the actual observation result of the user, specific behavior of the user triggers the intelligent driving device to determine that the perception result is inconsistent with the actual observation result of the user. For example, that the specific behavior of the user may be that the user may stare at an obstacle subject to a missed detection or a false detection, or may be an action (for example, blinking twice), or may be that the user broadcasts "missed detection or false detection" by voice.

Optionally, when the perception result is inconsistent with an actual observation result of the user, determining the key information in the traveling environment information based on the biometric feature information of the user may be understood as when the perception result is inconsistent with the actual observation result of the user and the expression information of the user is the preset expression information, determining the key information in the traveling environment information based on the expression information of the user; or when the perception result is inconsistent with the actual observation result of the user and the action information of the user is the preset action information, determining the key information in the traveling environment information based on the action information of the user; or when the perception result is inconsistent with the actual observation result of the user and the speech information of the user is the preset speech information, determining the key information in the traveling environment information based on the speech information of the user. Optionally, this manner of determining the key information may be classified as a level 3. Optionally, a higher level indicates higher effectiveness of the obtained key information, but higher interference with the driver.

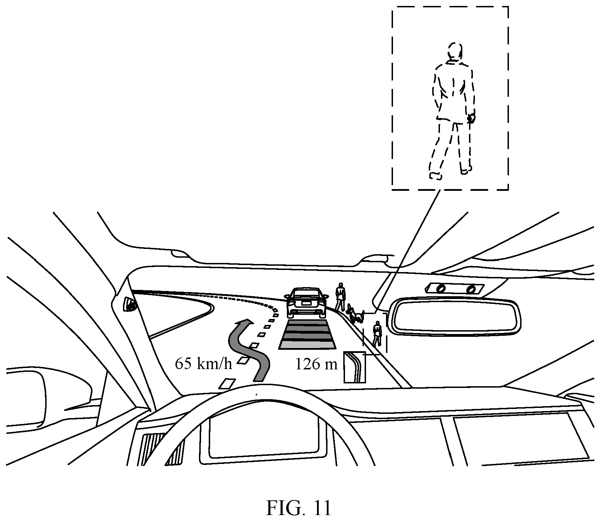

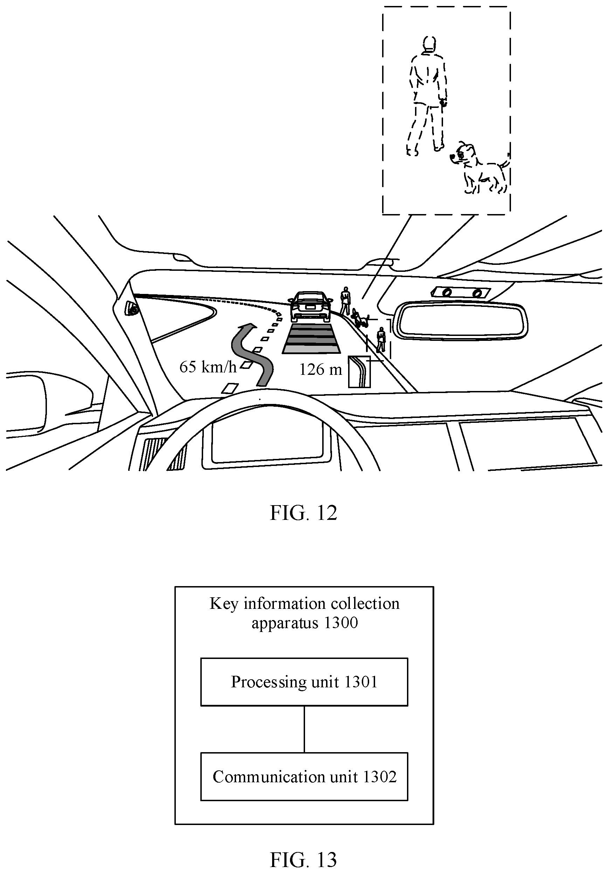

In an example, FIG. 11 is a diagram of projecting a perception result through an AR-HUD according to this embodiment of this application, and FIG. 12 is a diagram of an actual observation result of a user according to this embodiment of this application. The perception result is a pedestrian, the actual observation result of the user is the pedestrian and a dog, and a perception algorithm produces a missed detection of the dog. The perception result is inconsistent with the actual observation result of the user. For example, a preset action is that a driver blinks twice consecutively, and when action information of the user is that the user blinks twice consecutively, key information in traveling environment information is determined based on the action information of the user.

In the method, in this way, participation of the user in the key information collection process is improved, but there is much interference with the user. In this case, comparison between the perception result and the actual observation result of the user improves the effectiveness of the collected key information, avoids missed and false detections of key information, and further improves the probability of obtaining a rare obstacle. To some extent, the user becomes a tester of the perception algorithm, and performs quality inspection and loopback correction on the perception algorithm. A vehicle enterprise may consider setting a reward mechanism to attract users to participate.

In the method described in FIG. 4, the user in the driving device may have corresponding reactions to a traveling environment, and these reactions may be reflected in the biometric feature information of the user. After the traveling environment information is obtained, the key information in the traveling environment information is determined based on the biometric feature information of the user, where the key information may be about a rare obstacle. In this way, the reactions of the user to the traveling environment can be used to select the key information in the traveling environment information, thereby obtaining the highly effective key information, and reducing missed detections of obstacles. For example, when the user reacts obviously to a traveling environment at a moment (for example, an eye fixation or a surprised expression), it indicates that a rare obstacle that affects driving, that is, key information, may exist in the traveling environment at the moment. In this case, traveling environment information at the current moment or in a time period corresponding to the current moment may be stored in time, to determine the key information. In conclusion, in this solution, determining the key information in the traveling environment information based on a biometric feature of the user, to improve the effectiveness of the collected key information, and obtain the key information in a more timely manner, thereby reducing the missed detections of obstacles, and facilitating planning and implementation of an autonomous driving task. Further, this solution can also improve the probability of obtaining a rare obstacle. For example, for the user, a daily driving route is fixed (for example, going to and leaving work, and picking up and dropping off a child), and the user may frequently encounter a same rare obstacle. According to this embodiment of this application, the rare obstacle can be identified, so that intelligent driving is smoother and a risk is reduced.

The method in this embodiment of this application is described in detail above. The following provides an apparatus in an embodiment of this application.

FIG. 13 is a diagram of a structure of a key information collection apparatus 1300 according to an embodiment of this application. The key information collection apparatus 1300 may be a vehicle-mounted computing platform. The key information collection apparatus 1300 may include a processing unit 1301 and a communication unit 1302. The units are specifically as follows:
The processing unit 1301 is configured to perform data processing. The communication unit 1302 may implement a corresponding communication function. The communication unit 1302 may also be referred to as a communication interface or a communication module.

Optionally, the key information collection apparatus 1300 may further include a storage unit. The storage unit may be configured to store instructions and/or data. The processing unit 1301 may read the instructions and/or the data in the storage module, to enable the communication apparatus to implement the foregoing method embodiment.

The key information collection apparatus 1300 may be configured to perform an action performed by the intelligent driving device in the foregoing method embodiment. The key information collection apparatus 1300 may be an intelligent driving device or a component that can be disposed in an intelligent driving device. The processing unit 1301 is configured to perform a processing-related operation of the intelligent driving device in the foregoing method embodiment. The communication unit 1302 is configured to perform a communication-related operation of the intelligent driving device in the foregoing method embodiment.

Optionally, the communication unit 1302 may include a sending unit and a receiving unit. The sending unit is configured to perform a sending operation in the foregoing method embodiment. The receiving unit is configured to perform a receiving operation in the foregoing method embodiment.

It should be noted that the key information collection apparatus 1300 may include the sending unit, but does not include the receiving unit. Alternatively, the key information collection apparatus 1300 may include the receiving unit, but does not include the sending unit. This specifically depends on whether the foregoing solution performed by the key information collection apparatus 1300 includes a sending action and a receiving action.

Optionally, the key information collection apparatus 1300 is configured to perform the actions performed by the intelligent driving device in the embodiment shown in FIG. 4. For details, refer to the related descriptions in the embodiment shown in FIG. 4. Details are not described herein again. For example, the key information collection apparatus 1300 is configured to perform the following solution.

The processing unit 1301 is configured to obtain biometric feature information of a user in the intelligent driving device, where the biometric feature information of the user includes one or more of the following: expression information of the user, action information of the user, speech information of the user, eyeball focus information of the user, or pupil change information of the user.

The processing unit 1301 is configured to obtain traveling environment information of the intelligent driving device.

The processing unit 1301 is configured to determine key information in the traveling environment information based on the biometric feature information of the user, where the key information is for assisting in intelligent driving.

In a possible implementation, the processing unit 1301 is configured to: when the expression information of the user is preset expression information, determine the key information in the traveling environment information based on the expression information of the user; or the processing unit 1301 is configured to: when the action information of the user is preset action information, determine the key information in the traveling environment information based on the action information of the user; or the processing unit 1301 is configured to: when the speech information of the user is preset speech information, determine the key information in the traveling environment information based on the speech information of the user.

In another possible implementation, the processing unit 1301 is further configured to obtain a description of the user for the key information; and the storage unit is configured to store a correspondence between the description and the key information, where the correspondence is for model training.

In another possible implementation, the communication unit 1302 is configured to output first prompt information, where the first prompt information is for requesting the description of the key information; and the communication unit 1302 is configured to receive response information of the first prompt information, and obtain the description of the user for the key information based on the response information.

In another possible implementation, the communication unit 1302 is further configured to output a perception result of the intelligent driving device for a current traveling environment; and the processing unit 1301 is further configured to: when the perception result is inconsistent with an actual observation result of the user, determine the key information in the traveling environment information based on the biometric feature information of the user.

In another possible implementation, the communication unit 1302 is configured to project the perception result through an augmented reality-head up display AR-HUD; or display the perception result through a display; or broadcast the perception result by voice.

In another possible implementation, the communication unit 1302 is further configured to output second prompt information, where the second prompt information is for notifying the user that the intelligent driving device needs to obtain the biometric feature information of the user.

It should be noted that for implementation and beneficial effect of the units, refer to corresponding descriptions in the method embodiment shown in FIG. 4.

It should be understood that a specific process in which the modules perform the foregoing corresponding process has been described in detail in the foregoing method embodiment. For brevity, details are not described herein again.

The processing unit 1301 in the foregoing embodiment may be implemented by at least one processor or a processor-related circuit. The communication unit 1302 may be implemented by using a transceiver or a transceiver-related circuit. The communication unit 1302 may also be referred to as a communication module or a communication interface. The storage module may be implemented by at least one memory.

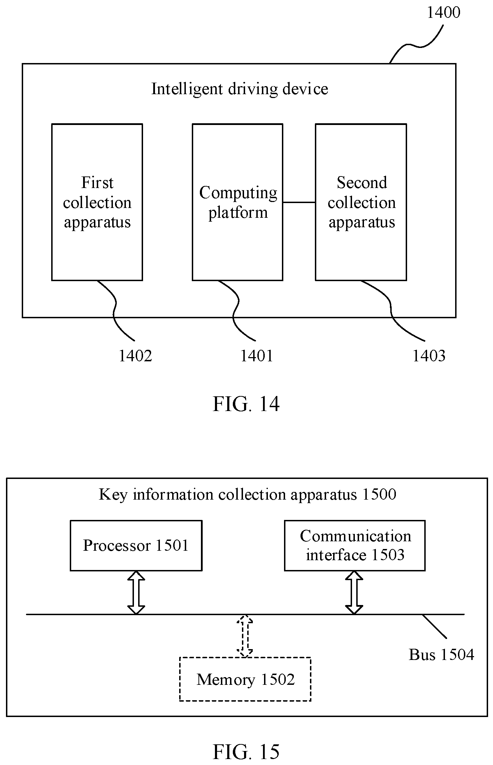

FIG. 14 is a diagram of a structure of an intelligent driving device 1400 according to an embodiment of this application. The intelligent driving device 1400 includes a computing platform 1401, a first collection apparatus 1402, and a second collection apparatus 1403. The computing platform 1401 is configured to:
obtain biometric feature information of a user in the intelligent driving device through the first collection apparatus 1402, where the biometric feature information of the user includes one or more of the following: expression information of the user, action information of the user, speech information of the user, eyeball focus information of the user, or pupil change information of the user;
obtain traveling environment information of the intelligent driving device through the second collection apparatus 1403; and
determine key information in the traveling environment information based on the biometric feature information of the user, where the key information is for assisting in intelligent driving.

The first collection apparatus 1402 may be a DMS, and the second collection apparatus 1403 may be a sensor.

In a possible implementation, when determining the key information in the traveling environment information based on the biometric feature information of the user, the computing platform 1401 is configured to: when the expression information of the user is preset expression information, determine the key information in the traveling environment information based on the expression information of the user; or when the action information of the user is preset action information, determine the key information in the traveling environment information based on the action information of the user; or when the speech information of the user is preset speech information, determine the key information in the traveling environment information based on the speech information of the user.

In another possible implementation, the computing platform 1401 is further configured to: obtain a description of the user for the key information; and store a correspondence between the description and the key information, where the correspondence is for model training.

In another possible implementation, when obtaining the description of the user for the key information, the computing platform 1401 is configured to: output first prompt information, where the first prompt information is for requesting the description of the key information; and receive response information of the first prompt information, and obtain the description of the user for the key information based on the response information.

In another possible implementation, the computing platform 1401 is further configured to: output a perception result of the intelligent driving device for a current traveling environment; and when the perception result is inconsistent with an actual observation result of the user, determine the key information in the traveling environment information based on the biometric feature information of the user.

In another possible implementation, when outputting the perception result of the intelligent driving device for the current traveling environment, the computing platform 1401 is configured to: project the perception result through an augmented reality-head up display AR-HUD; or display the perception result on a display; or broadcast the perception result by voice.

In another possible implementation, the computing platform 1401 is further configured to output second prompt information, where the second prompt information is for notifying the user that the intelligent driving device needs to obtain the biometric feature information of the user.

It should be noted that for implementation and beneficial effect of the units, refer to corresponding descriptions in the method embodiment shown in FIG. 4.

FIG. 15 shows a key information collection apparatus 1500 according to an embodiment of this application. The key information collection apparatus 1500 may be a vehicle-mounted computing platform. The key information collection apparatus 1500 includes at least one processor 1501 and a communication interface 1503. Optionally, the key information collection apparatus 1500 further includes a memory 1502. The processor 1501, the memory 1502, and the communication interface 1503 are connected to each other through a bus 1504.

The memory 1502 includes, but is not limited to, a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 1502 is configured to store related computer programs and data. The communication interface 1503 is configured to receive and send data.

The processor 1501 may be one or more central processing units (central processing units, CPUs). When the processor 1501 is one CPU, the CPU may be a single-core CPU, or may be a multi-core CPU.

The processor 1501 in the key information collection apparatus 1500 is configured to read the computer program or instructions stored in the memory 1502 to perform the following operations.

The processor 1501 is configured to obtain biometric feature information of a user in an intelligent driving device, where the biometric feature information of the user includes one or more of the following: expression information of the user, action information of the user, speech information of the user, eyeball focus information of the user, or pupil change information of the user.

The processor 1501 is configured to obtain traveling environment information of the intelligent driving device.

The processor 1501 is configured to determine key information in the traveling environment information based on the biometric feature information of the user, where the key information is for assisting in intelligent driving.

In a possible implementation, the processor 1501 is configured to: when the expression information of the user is preset expression information, determine the key information in the traveling environment information based on the expression information of the user; or the processor 1501 is configured to: when the action information of the user is preset action information, determine the key information in the traveling environment information based on the action information of the user; or the processor 1501 is configured to: when the speech information of the user is preset speech information, determine the key information in the traveling environment information based on the speech information of the user.

In another possible implementation, the processor 1501 is further configured to obtain a description of the user for the key information; and the storage unit is configured to store a correspondence between the description and the key information, where the correspondence is for model training.

In another possible implementation, the processor 1501 is configured to output first prompt information through the communication interface 1503, where the first prompt information is for requesting the description of the key information; and the processor 1501 is configured to receive response information of the first prompt information through the communication interface 1503, and obtain the description of the user for the key information based on the response information.

In another possible implementation, the processor 1501 is further configured to output a perception result of the intelligent driving device for a current traveling environment through the communication interface 1503; and the processor 1501 is further configured to: when the perception result is inconsistent with an actual observation result of the user, determine the key information in the traveling environment information based on the biometric feature information of the user.

In another possible implementation, the processor 1501 is configured to project the perception result through the communication interface 1503 and an augmented reality-head up display AR-HUD; or display the perception result through a display; or broadcast the perception result by voice.

In another possible implementation, the processor 1501 is further configured to output second prompt information through the communication interface 1503, where the second prompt information is for notifying the user that the intelligent driving device needs to obtain the biometric feature information of the user.

It should be noted that for implementation and beneficial effect of the operations, refer to corresponding descriptions in the method embodiment shown in FIG. 4.

An embodiment of this application further provides a computer-readable storage medium. The computer-readable storage medium stores a computer program or instructions. When the computer program or the instructions are run on a processor, the method performed by the intelligent driving device in the foregoing method embodiment is implemented.

An embodiment of this application further provides a computer program product. The computer program product includes a computer program or instructions. When the computer program or the instructions are run on a processor, the method performed by the intelligent driving device in the foregoing method embodiment is implemented.

An embodiment of this application further provides a chip. The chip includes a circuit, and the circuit is configured to implement the method performed by the intelligent driving device in the foregoing method embodiment.

In embodiments of this application, unless otherwise stated or there is a logic conflict, terms and/or descriptions between different embodiments are consistent and may be mutually referenced, and technical features in different embodiments may be combined based on an internal logical relationship thereof, to form a new embodiment.

## Claims

1. A key information collection method, applied to an intelligent driving scenario, and comprising:
obtaining biometric feature information of a user in an intelligent driving device, wherein the biometric feature information of the user comprises one or more of the following: expression information of the user, action information of the user, speech information of the user, eyeball focus information of the user, or pupil change information of the user;
obtaining traveling environment information of the intelligent driving device; and
determining key information in the traveling environment information based on the biometric feature information of the user, wherein the key information is for assisting in intelligent driving.

2. The method according to claim 1, wherein determining the key information in the traveling environment information based on the biometric feature information of the user comprises:
when the expression information of the user is preset expression information, determining the key information in the traveling environment information based on the expression information of the user; or
when the action information of the user is preset action information, determining the key information in the traveling environment information based on the action information of the user; or
when the speech information of the user is preset speech information, determining the key information in the traveling environment information based on the speech information of the user.

3. The method according to claim 1 or 2, wherein after determining the key information in the traveling environment information based on the biometric feature information of the user, the method further comprises:
obtaining a description of the user for the key information; and
storing a correspondence between the description and the key information, wherein the correspondence is for model training.

4. The method according to claim 3, wherein obtaining the description of the user for the key information comprises:
outputting first prompt information, wherein the first prompt information is for requesting the description of the key information; and
receiving response information of the first prompt information, and obtaining the description of the user for the key information based on the response information.

5. The method according to claim 1 or 2, wherein the method further comprises:
outputting a perception result of the intelligent driving device for a current traveling environment; and
when the perception result is inconsistent with an actual observation result of the user, determining the key information in the traveling environment information based on the biometric feature information of the user.

6. The method according to claim 5, wherein outputting the perception result of the intelligent driving device for the current traveling environment comprises:
projecting the perception result through an augmented reality-head up display AR-HUD; or
displaying the perception result on a display; or
broadcasting the perception result by voice.

7. The method according to any one of claims 1 to 6, wherein the method further comprises:
outputting second prompt information, wherein the second prompt information is for notifying the user that the intelligent driving device needs to obtain the biometric feature information of the user.

8. An intelligent driving device, wherein the intelligent driving device comprises a computing platform, a first collection apparatus, and a second collection apparatus, and the computing platform is configured to:
obtain biometric feature information of a user in the intelligent driving device through the first collection apparatus, wherein the biometric feature information of the user comprises one or more of the following: expression information of the user, action information of the user, speech information of the user, eyeball focus information of the user, or pupil change information of the user;
obtain traveling environment information of the intelligent driving device through the second collection apparatus; and
determine key information in the traveling environment information based on the biometric feature information of the user, wherein the key information is for assisting in intelligent driving.

9. The intelligent driving device according to claim 8, wherein when determining the key information in the traveling environment information based on the biometric feature information of the user, the computing platform is configured to:
when the expression information of the user is preset expression information, determine the key information in the traveling environment information based on the expression information of the user; or
when the action information of the user is preset action information, determine the key information in the traveling environment information based on the action information of the user; or
when the speech information of the user is preset speech information, determine the key information in the traveling environment information based on the speech information of the user.

10. The intelligent driving device according to claim 8 or 9, wherein the computing platform is further configured to:
obtain a description of the user for the key information; and
store a correspondence between the description and the key information, wherein the correspondence is for model training.

11. The intelligent driving device according to claim 10, wherein when obtaining the description of the user for the key information, the computing platform is configured to:
output first prompt information, wherein the first prompt information is for requesting the description of the key information; and
receive response information of the first prompt information, and obtain the description of the user for the key information based on the response information.

12. The intelligent driving device according to claim 8 or 9, wherein the computing platform is further configured to:
output a perception result of the intelligent driving device for a current traveling environment; and
when the perception result is inconsistent with an actual observation result of the user, determine the key information in the traveling environment information based on the biometric feature information of the user.

13. The intelligent driving device according to claim 12, wherein when outputting the perception result of the intelligent driving device for the current traveling environment, the computing platform is configured to:
project the perception result through an augmented reality-head up display AR-HUD; or
display the perception result on a display; or
broadcast the perception result by voice.

14. The intelligent driving device according to any one of claims 8 to 13, wherein the computing platform is further configured to:
output second prompt information, wherein the second prompt information is for notifying the user that the intelligent driving device needs to obtain the biometric feature information of the user.

15. A key information collection apparatus, comprising a processor and a memory, wherein the memory and the processor are interconnected through a line, the processor is configured to obtain a computer program stored in the memory, and when the computer program is executed by the processor, the method according to any one of claims 1 to 7 is implemented.

16. The key information collection apparatus according to claim 15, wherein the key information collection apparatus is a vehicle-mounted computing platform.

17. A computer-readable storage medium, wherein the computer-readable storage medium stores a computer program or instructions, and when the computer program or the instructions are run on a processor, the method according to any one of claims 1 to 7 is implemented.

18. A computer program product, wherein the computer program product comprises a computer program or instructions, and when the computer program or the instructions are run on a computer, the method according to any one of claims 1 to 7 is implemented.
